(19) Europäisches Patentamt
European Patent Office
Office européen des brevets

(11) EP 0 997 387 A1

# (12) EUROPEAN PATENT APPLICATION

(43) Date of publication:
**03.05.2000 Bulletin 2000/18**

(51) Int. Cl.[7]: **B65D 65/38**

(21) Application number: **98870225.4**

(22) Date of filing: **28.10.1998**

(84) Designated Contracting States:
**AT BE CH CY DE DK ES FI FR GB GR IE IT LI LU MC NL PT SE**
Designated Extension States:
**AL LT LV MK RO SI**

(71) Applicant:
**THE PROCTER & GAMBLE COMPANY**
**Cincinnati, Ohio 45202 (US)**

(72) Inventors:
- **Duquet, Jacky Pierre**
  **78580 Herbeville (FR)**
- **Wevers, Jean (NMN)**
  **1840 Steenhuffel (BE)**
- **Cossec, Bernard (NMN)**
  **78600 Maison Laffitte (FR)**

(74) Representative:
**Engisch, Gautier et al**
**BVBA Procter & Gamble Europe SPRL,**
**Temselaan 100**
**1853 Strombeek-Bever (BE)**

## (54) Packing material releasing perfume or other odoriferous substances

(57) The present invention provides a packaged product comprising a packaging system and a product, characterised in that the packaging system is formed from a packaging material, the packaging material having a packaging composition comprising a perfume.

EP 0 997 387 A1

## Description

Technical Field

The present invention relates to a packaged product whereby the product is typically comprising a perfume.

Background of the Invention

Perfumed products are widely used in consumer products industry for solid products. Most consumers have come to expect for example scented laundry products. Perfume additives make laundry compositions more aesthetically pleasing to the consumer, and in some cases the perfume imparts a pleasant fragrance to fabrics treated therewith. However, the amount of perfume carry-over from an aqueous laundry bath onto fabrics is often marginal and does not last long on the fabric. Fragrance materials are often very costly and their inefficient use in rinse added fabric softener compositions and ineffective delivery to fabrics from the rinse results in a very high cost to both consumers and fabric softener manufacturers. Industry, therefore, continues to seek with urgency for more efficient and effective fragrance delivery. Therefore, industry continues to seek improved alternatives for generating fragrances through economic and effective means. This is true for laundry product but is also applicable to other products as in the food industry, or in the cleaning industry for example.

The present invention concerns a packaged product comprising a packaging system and a product.

Among the advantages of using packaged product is that the product can be protected during storage or transport by means of the transfer and mechanical properties of the package.

While having these and other advantages, packaged product, and more particularly for a product having a tensile strength of at least 5 kPa, have disadvantages. For example, because of the fact that such products have a minimum tensile strength of 5 kPa, such products are relatively compact, so that in case of such products comprising a perfume, the scent will have difficulties to diffuse because of the fact that the product is compact. Further, for products which are not so compact, perfume delivery is still hindered by the product itself, as the product has volume, while perfume delivery mainly depends on surface activity.

The invention seeks to provide a packaged product of the above mentioned kind which can readily, effectively and cost effectively deliver a perfumed scent.

Summary of the Invention

In accordance with the invention, this object is accomplished when the packaging system is formed from a packaging material, the packaging material having a packaging composition comprising a perfume.

Detailed Description of the Invention

A packaged product formed in accordance with the invention has a number of advantages. Since the packaging material has a packaging composition comprising a perfume, the constraints on perfuming of the product itself are eased. This is more particularly true when applied to a product according to the invention whereby the product has a tensile strength of at least 5 kPa. Indeed, the more compact the product form is, the more reduced is the surface activity of the product. In other words, a perfume containing product will diffuse perfume more readily in a granular form than in a solid form, for example. The easing of such constraint may allow to reduce or even suppress perfume contained in the product itself while keeping the advantages of perfume delivery, thus having a beneficial influence on the environment and on the production costs.

The invention relates to a packaged product comprising a packaging system.

In a preferred embodiment, the packaging system is formed from a sheet of flexible material. By sheet should be understood a three dimensional structure whereby two of its three dimensions are significantly larger than the third dimension. The third dimension is the thickness of the sheet. This sheet is flexible, which means that it can be folded or bent easily without damage to its structure. Typically, it can handle curvature with a radius of curvature of the order of its thickness. Preferably, the sheet of material comprises a plait. A plait should be understood as a fold, crease or wrinkle, especially a plait is formed by a flattened fold of material made by doubling the material upon itself. Indeed, the plait is held flat against a part of the sheet which is thereby covered by the plait. Furthermore, the sheet of flexible material preferably comprises a micro-hole, the micro-hole being preferably located in the part of the sheet covered by the plait. In a preferred embodiment of the invention, the micro-hole has a diameter of at least 0.1 mm and of less than 1 mm, more preferably of at least 0.15 mm and up to 0.8 mm, even more preferably of at least 0.2 and up to 0.6 mm and most preferably of at least 0.3 and up to 0.4 mm. There may also be more than 1 micro-hole. Preferably, there is between 1 and 10 micro-holes per packaging system, more preferably between 2 and 8 micro-holes, even more preferably between 2 and 5 micro-holes and most preferably 3 micro-holes place in the covered part of the sheet. Other micro-holes placed in another part of the sheet may also be provided, depending on the transfer characteristics desired for the packaging system. It should be noted that typically, a micro-hole according to the invention placed in the covered part of the sheet is larger than a micro-hole which is in another non-covered part of the sheet. Normally, micro-holes can be made using a pin, the pin used having a 1mm diameter, the head having a diameter of the order of 0.1 mm for making a 0.1 mm diameter micro-hole, the dimension of the pin varying with the dimension of the micro-hole which is provided. The packaging system may be pinned prior to wrapping, for example using pins fixed onto a cylinder which rotates while the film roll passes to apply the micro-holes. Such micro-holes have a size of typically between 100 and 1000 μm, preferably between 250 and 900 μm, more preferably between 350 and 700 μm and most preferably between 400 and 500 μm. An advantage of using a micro-hole in combination with a material having a given Moisture Vapour Transfer Rate, or MVTR, is that the problem of the ingress of moisture and the problem of evacuation of gas is de-coupled. Indeed, ingress of moisture is readily controlled by choosing the appropriate MVTR, whereas a micro-hole has only a negligible influence on ingress of moisture because it is present only at some points on the packaging system without modifying the characteristics of the remaining surface of the packaging system and a micro-hole will not have a significant influence if there is no pressure gradient and if it is placed under a plait according to the invention. Indeed, if a relatively large micro-hole is provided, for example with a diameter of more than 0.3 mm, the mocro-hole can have a significant influence if it is not covered by a plait. As a pressure gradient will appear precisely when gas needs to be evacuated to prevent deformation of the packaging system, the micro-hole will fulfil its function without significant influence on the ingress of moisture. Indeed, as the sheet has a micro-hole, gas is evacuated out of the packaging system if pressure builds up within the packaging system, whereas gas transfer is very limited when the pressure inside the packaging system is in equilibrium with the external pressure. Indeed, a micro-hole is such that it will give way significantly only in case of a pressure gradient between the two sides of the hole. This is due to the resilience of the packing material. This "one-way" functioning of a micro-hole allowing only egress is particularly effective for micro-holes having a smaller size. Indeed, for micro-holes having a bigger size, the resiliency of the material forming the sheet will not be sufficient to close the micro-hole in the absence of pressure gradient. Therefore, such a packaging system allows to minimise ingress of gas further by use of the plait lying on the micro-hole, so that the plait acts as a valve. This means that better and faster venting with larger micro-holes can be obtained. In a further preferred embodiment of the packaging system according to the invention, the sheet of material forms a pocket. Forming of the pocket may be obtained by folding, gluing or sealing, by use of one or more sheets. It should be understood that a pocket is a package element which defines an internal space, whereby the pocket is made from a flexible sheet. In the preferred embodiment, the pocket is sealed with a first end seal, a second end seal and a longitudinal seal. For example, if the pocket is formed from a single rectangular sheet of material, the sheet of material may be folded on itself, sealed so as to form a sleeve, each end of the sleeve being thereafter sealed, whereby the seal forming the sleeve is the longitudinal seal, the end seals being the first end and second end seals. Indeed, it is preferred that the first and second end seals are both in a direction intersecting the direction of the longitudinal seal, most preferably the first and second end seals being both in a direction perpendicular to the direction of the longitudinal seal, each seal being formed by sealing together two opposing parts of the sheet of flexible material, the longitudinal seal forming the plait and being held flat onto the part of the covered part of the sheet by the first and second seals. It should be noted that such an embodiment is particularly suited to use for packing large numbers of consumer products in a flow wrapping process for example, whereby the package takes the shape of a rectangular sachet or pouch. In this case, the packaging system may be filled with product prior to forming the longitudinal seal, typically if the product is a solid product, or after forming the longitudinal seal and a first end seal, typically if the product is a flowing material such as a powder. The packaging system according to the invention may also be used in various other kinds of packages, such as bottles or boxes. Other examples of packages for which the application applies are pouches made of flexible films, optionally of the "stand-up" type, which could also comprise a plait covering part of the sheet.

In a preferred embodiment, the invention relates to a product, the product having a tensile strength of at least 5kPa. Indeed, the invention applies to products whereby diffusion of perfume should be facilitated, as is the case for compact products. Indeed, the invention more preferably relates to products having a tensile strength of at least 20 kPa, more preferably of at least 25 kPa, even more preferably of at least 35 kPa and most preferably of at least 50 kPa. Products having lower tensile strength, such as granules or powder or liquids for example, are also encompassed in the scope of the invention.

The invention relates to a packaging system formed from a packaging material, the packaging material having a packaging composition comprising a perfume. The packaging composition comprises a perfume, which means in other words that a perfume is part of the composition when the packaging material is being manufactured. Indeed, a packaging material may comprise a perfume, whereby the perfume has migrated in the packaging material from the product, which differs from the case where the perfume is part of the packaging composition itself according to the invention. The perfume can be integrated to the packaging material in different ways. For example, the perfume may be integrated in a coating which is part of the packaging material. The perfume preferably represents at least 3% by weight

of the coating, more preferably 5%, even more preferably 7%, and most preferably 10%. Such a coating could be obtained for example at the printing stage. In this case, the perfume would preferably be premixed with coating and applied as a printing ink with an engraved cylinder. An example of such a coating could be a release lacquer, a specially applied varnish, a cold seal used to seal the package, or a spray on solution. Typically, the packaging material would thereafter be dried in a heated tunnel, whereby the film speed and the tunnel temperature should preferably be such that the temperature of the perfumed coating does not exceed 50°C, more preferably not exceed 45°C, in order to avoid or reduce perfume degradation. Most preferably, the perfume should be applied such to be inside of the packaging system when the packaging system is sealed or closed. When the packaging system comprises a layer which acts as a perfume barrier layer, such as Bi-Oriented-Poly-Propylene (BOPP), applying the perfume to the inside allows to avoid perfume leaks, while maintaining the perfume inside of the packaging system to allow diffusion at opening.

The perfume comprised in the packaging composition is typically part of a fully formulated fragrance. Fully-formulated fragrance can be prepared using numerous known odorant ingredients of natural or synthetic origin. The range of the natural raw substances can embrace not only readily-volatile, but also moderately-volatile and slightly-volatile components and that of the synthetics can include representatives from practically all classes of fragrant substances, as will be evident from the following illustrative compilation. In this list of perfume ingredients, some are commercial names conventionally known to one skilled in the art, and also includes isomers. Such isomers are also suitable for use in the present invention. A typical disclosure of suitable ketone and/or aldehydes, traditionally used in perfumery, can be found in "perfume and Flavor Chemicals", Vol. I and II, S. Arctander, Allured Publishing, 1994, ISBN 0-931710-35-5. Preferred for the purpose of the present invention are the aldehydes or ketones based products.

- Natural products such as tree moss absolute, basil oil, citrus fruit oils (such as bergamot oil, mandarin oil, etc.), mastix absolute, myrtle oil, palmarosa oil, patchouli oil, petitgrain oil Paraguay, wormwood oil;
- Alcohols such as farnesol, geraniol, linalool, nerol, phenylethyl alcohol, rhodinol, cinnamic alcohol;
- Aldehydes such as citral, Helional, alpha-hexyl-cinnamaldehyde, hydroxycitronellal, Lilial (p-tert.butyl-alpha -methyldihydrocinnamaldehyde), methylnonylacetaldehyde, 1-decanal, benzaldehyde, florhydral, 2,4-dimethyl-3-cyclohexen-1-carboxaldehyde; cis/trans-3,7-dimethyl-2,6-octadien-1-al; heliotropin; 2,4,6-trimethyl-3-cyclohexene-1-carboxaldehyde; 2,6-nonadienal; alpha-n-amyl cinnamic aldehyde, P.T. Bucinal, lyral, cymal, methyl nonyl acetaldehyde, hexanal, trans-2-hexenal, and mixture thereof;
- Ketones such as allylionone, alpha-ionone, beta -ionone, isoraldein (isomethyl- alpha -ionone), methylionone, Alpha Damascone, Delta Damascone, Iso Damascone, Carvone, Gamma-Methyl-Ionone, Iso-E-Super, 2,4,4,7-Tetramethyl-oct-6-en-3-one, Benzyl Acetone, Beta Damascone, Damascenone, methyl dihydrojasmonate, methyl cedrylone, and mixtures thereof;
- Esters such as allyl phenoxyacetate, benzyl salicylate, cinnamyl propionate, citronellyl acetate, citronellyl ethoxolate, decyl acetate, dimethylbenzylcarbinyl acetate, dimethylbenzylcarbinyl butyrate, ethyl acetoacetate, ethyl acetylacetate, hexenyl isobutyrate, linalyl acetate, methyl dihydrojasmonate, styrallyl acetate, vetiveryl acetate, etc.;
- Lactones such as gamma-undecalactone, various components often used in perfumery, such as musk ketone, indole, p-menthane-8-thiol-3-one, and methyl-eugenol;
- Acetals and ketals include the well-known methyl and ethyl acetals and ketals, as well as acetals or ketals based on benzaldehyde, those comprising phenylethyl moieties, or more recently developed specialties such as those described in a United States Patent entitled "Acetals and Ketals of Oxo-Tetralins and Oxo-Indanes, see U.S. Pat. No. 5,084,440, issued January 28, 1992, assigned to Givaudan Corp. ;
- Recent synthetic specialties include the enol ethers of alkyl-substituted oxo-tetralins and oxo-indanes as described in U.S. Pat. 5,332,725, July 26, 1994, assigned to Givaudan; or Schiff Bases as described in U.S. Pat. 5,264,615, December 9, 1991, assigned to Givaudan.

In a preferred embodiment according to the invention the packaging system comprises means for facilitating opening of the packaging system. Such means may for example be a seal which can be opened by tiring or by pulling the two sides of the seal away from each other if the seal is pressure sensitive. Even more preferably, the package comprises means for allowing re-closability, such as a pressure sensitive cold seal for example. Preferably, the perfume is comprised in the means for facilitating opening, whereby the diffusion of the perfume occurs at opening of the product.

In a preferred embodiment of the packaged product according to the invention, the product is formed from a product material, the product material having a product composition comprising the perfume. In this manner, the perfume part of the packaging system can be simply used to reinforce the effect of the perfume already comprised in the product itself. It should be noted that the product or the packaging system may comprise more than one perfume, and may have one or more perfumes in common, or may even have perfumes which are only in the packaging system composition or in the product composition. For example, the product may comprise a number of perfumes having various characteristics, whereby solely those perfumes which have a better resistance to higher temperatures are integrated in

the packaging system. Indeed, the packaging system is typically submitted to higher temperatures during production.

Another preferred embodiment of the invention relates to a product obtained by compression of a flowing material. Indeed, when a product is transformed from a flowing material, such as granules for example, into a more compacted form, such as having a tensile strength of at least 5 kPa, the surface activity is significantly reduced, so that the packaged product according to the invention more particularly applies.

In a most preferred embodiment of the invention, the product is a detergent tablet. Tablets are portions which may have various cross sections. The cross section is normally circular, but it may be rectangular, square or elliptical for example. It should be noted that the invention more particularly applies to coated tablets, whereby the coating normally does not comprise perfume, and further inhibits perfume diffusion.

The tablets may comprise components such as fragrance, surfactants, enzymes, detergent etc.... Typical tablet compositions for the preferred embodiment of the present invention are disclosed in the pending European applications of the Applicant n° 96203471.6, 96203462.5, 96203473.2 and 96203464.1 for example. Elements typically entering in the composition of detergent tablets or of other forms of detergents such as liquids or granules are detailed in the following paragraphs.

Highly soluble Compounds

The tablet may comprise a highly soluble compound. Such a compound could be formed from a mixture or from a single compound. A highly soluble compound is defined as follow:
A solution is prepared as follows comprising de-ionised water as well as 20 grams per litre of a specific compound:

1- 20 g of the specific compound is placed in a Sotax Beaker. This beaker is placed in a constant temperature bath set at 10°C. A stirrer with a marine propeller is placed in the beaker so that the bottom of the stirrer is at 5 mm above the bottom of the Sotax beaker. The mixer is set at a rotation speed of 200 turns per minute.
2- 980 g of the de-ionised water is introduced into the Sotax beaker.
3- 10 s after the water introduction, the conductivity of the solution is measured, using a conductivity meter.
4- Step 3 is repeated after 20, 30, 40, 50, 1min, 2 min, 5 min and 10 min after step 2.
5- The measurement taken at 10 min is used as the plateau value or maximum value.

The specific compound is highly soluble according to the invention when the conductivity of the solution reaches 80% of its maximum value in less than 10 seconds, starting from the complete addition of the de-ionised water to the compound. Indeed, when monitoring the conductivity in such a manner, the conductivity reaches a plateau after a certain period of time, this plateau being considered as the maximum value. Such a compound is preferably in the form of a flowable material constituted of solid particles at temperatures comprised between 10 and 80°Celsius for ease of handling, but other forms may be used such as a paste or a liquid.
Example of highly soluble compounds include Sodium di isoalkylbenzene sulphonate or Sodium toluene sulphonate.

Cohesive Effect

The tablet may comprise a compound having a Cohesive Effect on the particulate material of a detergent matrix forming the tablet. The Cohesive Effect on the particulate material of a detergent matrix forming the tablet or a layer of the tablet is characterised by the force required to break a tablet or layer based on the examined detergent matrix pressed under controlled compression conditions. For a given compression force, a high tablet or layer strength indicates that the granules stuck highly together when they were compressed, so that a strong cohesive effect is taking place. Means to assess tablet or layer strength (also refer to diametrical fracture stress) are given in Pharmaceutical dosage forms : tablets volume 1 Ed. H.A. Lieberman et al, published in 1989.
The cohesive effect is measured by comparing the tablet or layer strength of the original base powder without compound having a cohesive effect with the tablet or layer strength of a powder mix which comprises 97 parts of the original base powder and 3 parts of the compound having a cohesive effect. The compound having a cohesive effect is preferably added to the matrix in a form in which it is substantially free of water (water content below 10% (pref. below 5%)). The temperature of the addition is between 10 and 80C, more pref. between 10 and 40C.
A compound is defined as having a cohesive effect on the particulate material according to the invention when at a given compacting force of 3000N, tablets with a weight of 50g of detergent particulate material and a diameter of 55mm have their tablet tensile strength increased by over 30% (preferably 60 and more preferably 100%) by means of the presence of 3% of the compound having a cohesive effect in the base particulate material.
An example of a compound having a cohesive effect is Sodium di isoalkylbenzene sulphonate.
When integrating a highly soluble compound having also a cohesive effect on the particulate material used for a tablet or layer formed by compressing a particulate material comprising a surfactant, the dissolution of the tablet or layer in an

aqueous solution is significantly increased. In a preferred embodiment, at least 1 % per weight of a tablet or layer is formed from the highly soluble compound, more preferably at least 2%, even more preferably at lest 3% and most preferably at least 5% per weight of the tablet or layer being formed from the highly soluble compound having a cohesive effect on the particulate material.

It should be noted that a composition comprising a highly soluble compound as well as a surfactant is disclosed in EP-A-0 524 075, this composition being a liquid composition.
A highly soluble compound having a cohesive effect on the particulate material allows to obtain a tablet having a higher tensile strength at constant compacting force or an equal tensile strength at lower compacting force when compared to traditional tablets. Typically, a whole tablet will have a tensile strength of more than 5kPa, preferably of more than 10kPa, more preferably, in particular for use in laundry applications, of more than 15kPa, even more preferably of more than 30 kPa and most preferably of more than 50 kPa, in particular for use in dish washing or auto dish washing applications; and a tensile strength of less than 300 kPa, preferably of less than 200 kPa, more preferably of less than 100 kPa, even more preferably of less than 80 kPa and most preferably of less than 60 kPa. Indeed, in case of laundry application, the tablets should be less compressed than in case of auto dish washing applications for example, whereby the dissolution is more readily achieved, so that in a laundry application, the tensile strength is preferably of less than 30 kPa.
This allows to produce tablets or layers which have a solidity and mechanical resistance comparable to the solidity or mechanical resistance of traditional tablets while having a less compact tablet or layer thus dissolving more readily. Furthermore, as the compound is highly soluble, the dissolution of the tablet or layer is further facilitated, resulting in a synergy leading to facilitated dissolution for a tablet according to the invention.

## Tablet Manufacture

The tablet may comprise several layers. For the purpose of manufacture of a single layer, the layer may be considered as a tablet itself.

Detergent tablets can be prepared simply by mixing the solid ingredients together and compressing the mixture in a conventional tablet press as used, for example, in the pharmaceutical industry. Preferably the principal ingredients, in particular gelling surfactants, are used in particulate form. Any liquid ingredients, for example surfactant or suds suppressor, can be incorporated in a conventional manner into the solid particulate ingredients.
In particular for laundry tablets, the ingredients such as builder and surfactant can be spray-dried in a conventional manner and then compacted at a suitable pressure. Preferably, the tablets according to the invention are compressed using a force of less than 100000N, more preferably of less than 50000N, even more preferably of less than 5000N and most preferably of less than 3000 N. Indeed, the most preferred embodiment is a tablet suitable for laundry compressed using a force of less than 2500N, but tablets for auto dish washing may also be considered for example, whereby such auto dish washing tablets are usually more compressed than laundry tablets.
The particulate material used for making a tablet can be made by any particulation or granulation process. An example of such a process is spray drying (in a co-current or counter current spray drying tower) which typically gives low bulk densities 600g/l or lower. Particulate materials of higher density can be prepared by granulation and densification in a high shear batch mixer/granulator or by a continuous granulation and densification process (e.g. using Lodige® CB and/or Lodige® KM mixers). Other suitable processes include fluid bed processes, compaction processes (e.g. roll compaction), extrusion, as well as any particulate material made by any chemical process like flocculation, crystallisation sentering, etc. Individual particles can also be any other particle, granule, sphere or grain.
The components of the particulate material may be mixed together by any conventional means. Batch is suitable in, for example, a concrete mixer, Nauta mixer, ribbon mixer or any other. Alternatively the mixing process may be carried out continuously by metering each component by weight on to a moving belt, and blending them in one or more drum(s) or mixer(s). Non-gelling binder can be sprayed on to the mix of some, or all of, the components of the particulate material. Other liquid ingredients may also be sprayed on to the mix of components either separately or premixed. For example perfume and slurries of optical brighteners may be sprayed. A finely divided flow aid (dusting agent such as zeolites, carbonates, silicas) can be added to the particulate material after spraying the binder, preferably towards the end of the process, to make the mix less sticky.
The tablets may be manufactured by using any compacting process, such as tabletting, briquetting, or extrusion, preferably tabletting. Suitable equipment includes a standard single stroke or a rotary press (such as Courtoy®, Korch®, Manesty®, or Bonals®). The tablets prepared according to this invention preferably have a diameter of between 20mm and 60mm, preferably of at least 35 and up to 55 mm, and a weight between 25 and 100 g. The ratio of height to diameter (or width) of the tablets is preferably greater than 1:3, more preferably greater than 1:2. The compaction pressure used for preparing these tablets need not exceed 100000 $kN/m^2$, preferably not exceed 30000 $kN/m^2$, more preferably not exceed 5000 $kN/m^2$, even more preferably not exceed 3000$kN/m^2$ and most preferably not exceed 1000$kN/m^2$. In a preferred embodiment according to the invention, the tablet has a density of at least 0.9 g/cc, more preferably of at least 1.0 g/cc, and preferably of less than 2.0 g/cc, more preferably of less than 1.5 g/cc, even more preferably of less

than 1.25 g/cc and most preferably of less than 1.1 g/cc.
Multi layered tablets are typically formed in rotating presses by placing the matrices of each layer, one after the other in matrix force feeding flasks. As the process continues, the matrix layers are then pressed together in the pre-compression and compression stages stations to form the multilayer layer tablet. With some rotating presses it is also possible to compress the first feed layer before compressing the whole tablet.

Hydrotrope compound

A highly soluble compound having a cohesive effect may be integrated to a detergent tablet, whereby this compound is also a hydrotrope compound. Such hydrotrope compound may be generally used to favour surfactant dissolution by avoiding gelling. A specific compound is defined as being hydrotrope as follows (see S.E. Friberg and M. Chiu, J. Dispersion Science and Technology, 9(5&6), pages 443 to 457, (1988-1989)):

1. A solution is prepared comprising 25% by weight of the specific compound and 75% by weight of water.
2. Octanoic Acid is thereafter added to the solution in a proportion of 1.6 times the weight of the specific compound in solution, the solution being at a temperature of 20°Celsius. The solution is mixed in a Sotax beaker with a stirrer with a marine propeller, the propeller being situated at about 5mm above the bottom of the beaker, the mixer being set at a rotation speed of 200 rounds per minute.
3. The specific compound is hydrotrope if the the Octanoic Acid is completely solubilised, i.e . if the solution comprises only one phase, the phase being a liquid phase.

It should be noted that in a preferred embodiment of the invention, the hydrotrope compound is a flowable material made of solid particles at operating conditions between 15 and 60° Celsius.
Hydrotrope compounds include the compounds listed thereafter:
A list of commercial hydrotropes could be found in McCutcheon's Emulsifiers and Detergents published by the McCutcheon division of Manufacturing Confectioners Company. Compounds of interest also include:

1. Nonionic hydrotrope with the following structure:

$$R - O - (CH2CH2O)x(\underset{CH3}{CH} - CH2O)yH$$

where R is a C8-C10 alkyl chain, x ranges from 1 to 15, y from 3 to 10.
2. Anionic hydrotropes such as alkali metal aryl sulfonates. This includes alkali metal salts of benzoic acid, salicylic acid, bezenesulfonic acid and its many derivatives, naphthoic acid and various hydroaromatic acids. Examples of these are sodium, potassium and ammonium benzene sulfonate salts derived from toluene sulfonic acid, xylene sulfonic acid, cumene sulfonic acid, tetralin sulfonic acid, naphtalene sulfonic acid, methyl- naphtalene sulfonic acid, dimethyl naphtalene sulfonic acid, trimethyl naphtalene sulfonic acid=
Other examples include salts of dialkyl benzene sulfonic acid such as salts of di-isopropyl benzene sulfonic acid, ethyl methyl benzene sulfonic acid, alkyl benzene sulfonic acid with an alkyl chain length with 3 to 10, (pref. 4 to 9), linear or branched alkyl sulfonates with an alkyl chain with 1 to 18 carbons.
3. Solvent hydrotropes such as alkoxylated glycerines and alkoxylated glycerides, esters slakoxylated glycerines, alkoxylated fatty acids, esters of glycerin, polyglycerol esters. Preferred alkoxylated glycerines have the following structure:

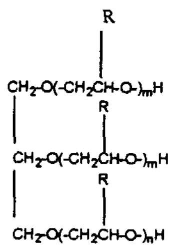

where l, m and n are each a number from 0 to about 20, with l+m+n = from about 2 to about 60 , preferably from about 10 to about 45 and R represents H, $CH_3$ or $C_2H_5$
Preferred alkoxylated glycerides have the following struture

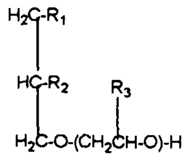

where R1 and R2 are each $C_nCOO$ or $-(CH2CHR_3-O)_l-H$ where $R_3$ = H, $CH_3$ or $C_2H_5$ and l is a number from 1 to about 60, n is a number from about 6 to about 24.

4. Polymeric hydrotropes such as those described in EP636687:

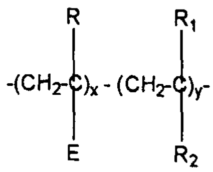

where E is a hydrophilic functional group,

R is H or a C1-C10 alkyl group or is a hydrophilic functional group;
R1 is H a lower alkyl group or an aromatic group,
R2 is H or a cyclic alkyl or aromatic group.

The polymer typically has a molecular weight of between about 1000 and 1000000.

5. Hydrotrope of unusual structure such as 5-carboxy-4-hexyl-2-cyclohexene-1-yl octanoic acid (Diacid®)

Use of such compound in the invention would further increase the dissolution rate of the tablet, as a hydrotrope compound facilitates dissolution of surfactants, for example. Such a compound could be formed from a mixture or from a single compound.

Coating

Solidity of a tablet may be improved by making a coated tablet, the coating covering a non-coated tablet, thereby further improving the mechanical characteristics of the tablet while maintaining or further improving dissolution. This very advantageously applies to multi-layer tablets, whereby the mechanical characteristics of a more elastic layer can be transmitted via the coating to the rest of the tablet, thus combining the advantage of the coating with the advantage of the more elastic layer. Indeed, mechanical constraints will be transmitted through the coating, thus improving mechanical integrity of the tablet.

In one embodiment of the present invention, the tablets may then be coated so that the tablet does not absorb moisture, or absorbs moisture at only a very slow rate. The coating is also strong so that moderate mechanical shocks to which the tablets are subjected during handling, packing and shipping result in no more than very low levels of breakage or attrition. Finally the coating is preferably brittle so that the tablet breaks up when subjected to stronger mechanical shock. Furthermore it is advantageous if the coating material is dissolved under alkaline conditions, or is readily emulsified by surfactants. This contributes to avoiding the problem of visible residue in the window of a front-loading washing machine during the wash cycle, and also avoids deposition of undissolved particles or lumps of coating material on the laundry load.

Water solubility is measured following the test protocol of ASTM E1148-87 entitled, "Standard Test Method for Measurements of Aqueous Solubility".

Suitable coating materials are dicarboxylic acids. Particularly suitable dicarboxylic acids are selected from the group consisting of oxalic acid, malonic acid, succinic acid, glutaric acid, adipic acid, pimelic acid, suberic acid, azelaic acid, sebacic acid, undecanedioic acid, dodecanedioic acid, tridecanedioic acid and mixtures thereof.

The coating material has a melting point preferably of from 40 °C to 200 °C.

The coating can be applied in a number of ways. Two preferred coating methods are a) coating with a molten material and b) coating with a solution of the material.

In a), the coating material is applied at a temperature above its melting point, and solidifies on the tablet. In b), the coating is applied as a solution, the solvent being dried to leave a coherent coating. The substantially insoluble material can

be applied to the tablet by, for example, spraying or dipping. Normally when the molten material is sprayed on to the tablet, it will rapidly solidify to form a coherent coating. When tablets are dipped into the molten material and then removed, the rapid cooling again causes rapid solidification of the coating material. Clearly substantially insoluble materials having a melting point below 40 °C are not sufficiently solid at ambient temperatures and it has been found that materials having a melting point above about 200 °C are not practicable to use. Preferably, the materials melt in the range from 60 °C to 160 °C, more preferably from 70 °C to 120 °C.

By "melting point" is meant the temperature at which the material when heated slowly in, for example, a capillary tube becomes a clear liquid.

A coating of any desired thickness can be applied according to the present invention. For most purposes, the coating forms from 1% to 10%, preferably from 1.5% to 5%, of the tablet weight.

Tablet coatings are very hard and provide extra strength to the tablet.

Fracture of the coating in the wash can be improved by adding a disintegrant in the coating. This disintegrant will swell once in contact with water and break the coating in small pieces. This will improve the dissolution of the coating in the wash solution. The disintegrant is suspended in the coating melt at a level of up to 30%, preferably between 5% and 20%, most preferably between 5 and 10% by weight. Possible disintegrants are described in Handbook of Pharmaceutical Excipients (1986). Examples of suitable disintegrants include starch: natural, modified or pregelatinized starch, sodium starch gluconate; gum: agar gum, guar gum, locust bean gum, karaya gum, pectin gum, tragacanth gum; croscarmylose Sodium, crospovidone, cellulose, carboxymethyl cellulose, algenic acid and its salts including sodium alginate, silicone dioxide, clay, polyvinylpyrrolidone, soy polysacharides, ion exchange resins and mixtures thereof.

## Tensile Strength

For the purpose of measuring tensile strength of a layer, the layer may be considered as a tablet itself.

Depending on the composition of the starting material, and the shape of the tablets, the used compacting force may be adjusted to not affect the tensile strength, and the disintegration time in the washing machine. This process may be used to prepare homogenous or layered tablets of any size or shape.

For a cylindrical tablet, the tensile strength corresponds to the diametrical fracture stress (DFS) which is a way to express the strength of a tablet or layer, and is determined by the following equation:

$$\text{Tensile strength} = 2F/\pi Dt$$

Where F is the maximum force (Newton) to cause tensile failure (fracture) measured by a VK 200 tablet hardness tester supplied by Van Kell industries, Inc. D is the diameter of the tablet or layer, and t the thickness of the tablet or layer. For a non round tablet, $\pi D$ may simply be replaced by the perimeter of the tablet.

(Method Pharmaceutical Dosage Forms : Tablets Volume 2 Page 213 to 217). A tablet having a diametral fracture stress of less than 20 kPa is considered to be fragile and is likely to result in some broken tablets being delivered to the consumer. A diametral fracture stress of at least 25 kPa is preferred.

This applies similarly to non cylindrical tablets, to define the tensile strength, whereby the cross section normal to the height of the tablet is non round, and whereby the force is applied along a direction perpendicular to the direction of the height of the tablet and normal to the side of the tablet, the side being perpendicular to the non round cross section.

## Tablet Dispensing

The rate of dispensing of a detergent tablet can be determined in the following way:

Two tablets, nominally 50 grams each, are weighed, and then placed in the dispenser of a Baucknecht® WA9850 washing machine. The water supply to the washing machine is set to a temperature of 20 °C and a hardness of 21 grains per gallon, the dispenser water inlet flow-rate being set to 8 l/min. The level of tablet residues left in the dispenser is checked by switching the washing on and the wash cycle set to wash program 4 (white/colors, short cycle). The dispensing percentage residue is determined as follows:

$$\% \text{ dispensing} = \text{residue weight} \times 100 / \text{original tablet weight}$$

The level of residues is determined by repeating the procedure 10 times and an average residue level is calculated based on the ten individual measurements. In this stressed test a residue of 40 % of the starting tablet weight is considered to be acceptable. A residue of less than 30% is preferred, and less than 25% is more preferred.

It should be noted that the measure of water hardness is given in the traditional "grain per gallon" unit, whereby 0.001 mole per litre = 7.0 grain per gallon, representing the concentration of $Ca^{2+}$ ions in solution.

Effervescent

Tablets may further comprise an effervescent.
Effervescency as defined herein means the evolution of bubbles of gas from a liquid, as the result of a chemical reaction between a soluble acid source and an alkali metal carbonate, to produce carbon dioxide gas,

$$\text{i.e. } C_6H_8O_7 + 3NaHCO_3 \rightarrow Na_3C_6H_5O_7 + 3CO_2 \uparrow + 3H_2O$$

Further examples of acid and carbonate sources and other effervescent systems may be found in : (Pharmaceutical Dosage Forms : Tablets Volume 1 Page 287 to 291).
An effervescent may be added to the tablet mix in addition to the detergent ingredients. The addition of this effervescent to the detergent tablet improves the disintegration time of the tablet. The amount will preferably be between 5 and 20 % and most preferably between 10 and 20% by weight of the tablet. Preferably the effervescent should be added as an agglomerate of the different particles or as a compact, and not as separated particles.
Due to the gas created by the effervescency in the tablet, the tablet can have a higher D.F.S. and still have the same disintegration time as a tablet without effervescency. When the D.F.S. of the tablet with effervescency is kept the same as a tablet without, the disintegration of the tablet with effervescency will be faster.
Further dissolution aid could be provided by using compounds such as sodium acetate or urea. A list of suitable dissolution aid may also be found in Pharmaceutical Dosage Forms: Tablets, Volume 1, Second edition, Edited by H.A. Lieberman et all, ISBN 0-8247-8044-2.

Detersive surfactants

Surfactant are typically comprised in a detergent composition. The dissolution of surfactants is favoured by the addition of the highly soluble compound.
Nonlimiting examples of surfactants useful herein typically at levels from about 1 % to about 55%, by weight, include the conventional $C_{11}$-$C_{18}$ alkyl benzene sulfonates ("LAS") and primary, branched-chain and random $C_{10}$-$C_{20}$ alkyl sulfates ("AS"), the $C_{10}$-$C_{18}$ secondary (2,3) alkyl sulfates of the formula $CH_3(CH_2)_x(CHOSO_3{}^-M^+)\ CH_3$ and $CH_3(CH_2)_y(CHSO_3{}^-M^+)\ CH_2CH_3$ where x and (y + 1) are integers of at least about 7, preferably at least about 9, and M is a water-solubilizing cation, especially sodium, unsaturated sulfates such as oleyl sulfate, the $C_{10}$-$C_{18}$ alkyl alkoxy sulfates ("$AE_xS$"; especially EO 1-7 ethoxy sulfates), $C_{10}$-$C_{18}$ alkyl alkoxy carboxylates (especially the EO 1-5 ethoxycarboxylates), the $C_{10-18}$ glycerol ethers, the $C_{10}$-$C_{18}$ alkyl polyglycosides and their corresponding sulfated polyglycosides, and $C_{12}$-$C_{18}$ alpha-sulfonated fatty acid esters. If desired, the conventional nonionic and amphoteric surfactants such as the $C_{12}$-$C_{18}$ alkyl ethoxylates ("AE") including the so-called narrow peaked alkyl ethoxylates and $C_6$-$C_{12}$ alkyl phenol alkoxylates (especially ethoxylates and mixed ethoxy/propoxy), $C_{12}$-$C_{18}$ betaines and sulfobetaines ("sultaines"), $C_{10}$-$C_{18}$ amine oxides, and the like, can also be included in the overall compositions. The $C_{10}$-$C_{18}$ N-alkyl polyhydroxy fatty acid amides can also be used. Typical examples include the $C_{12}$-$C_{18}$ N-methylglucamides. See WO 9,206,154. Other sugar-derived surfactants include the N-alkoxy polyhydroxy fatty acid amides, such as $C_{10}$-$C_{18}$ N-(3-methoxypropyl) glucamide. The N-propyl through N-hexyl $C_{12}$-$C_{18}$ glucamides can be used for low sudsing. $C_{10}$-$C_{20}$ conventional soaps may also be used. If high sudsing is desired, the branched-chain $C_{10}$-$C_{16}$ soaps may be used. Mixtures of anionic and nonionic surfactants are especially useful. Other conventional useful surfactants are listed in standard texts.
In a preferred embodiment, the tablet comprises at least 5% per weight of surfactant, more preferably at least 15% per weight, even more preferably at least 25% per weight, and most preferably between 35% and 45% per weight of surfactant.

Non gelling binders

Non gelling binders can be integrated to the particles forming a tablet to further facilitate dissolution.
If non gelling binders are used, suitable non-gelling binders include synthetic organic polymers such as polyethylene glycols, polyvinylpyrrolidones, polyacrylates and water-soluble acrylate copolymers. The handbook of Pharmaceutical Excipients second edition, has the following binders classification: Acacia, Alginic Acid, Carbomer, Carboxymethylcellulose sodium, Dextrin, Ethylcellulose, Gelatin, Guar gum, Hydrogenated vegetable oil type I, Hydroxyethyl cellulose, Hydroxypropyl methylcellulose, Liquid glucose, Magnesium aluminum silicate, Maltodextrin, Methylcellulose, polymethacrylates, povidone, sodium alginate, starch and zein. Most preferable binders also have an active cleaning function in the laundry wash such as cationic polymers, i.e. ethoxylated hexamethylene diamine quaternary compounds, bishexamethylene triamines, or others such as pentaamines, ethoxylated polyethylene amines, maleic acrylic polymers.
Non-gelling binder materials are preferably sprayed on and hence have an appropriate melting point temperature below 90°C, preferably below 70°C and even more preferably below 50°C so as not to damage or degrade the other active

ingredients in the matrix. Most preferred are non-aqueous liquid binders (i.e. not in aqueous solution) which may be sprayed in molten form. However, they may also be solid binders incorporated into the matrix by dry addition but which have binding properties within the tablet.
Non-gelling binder materials are preferably used in an amount within the range from 0.1 to 15% of the composition, more preferably below 5% and especially if it is a non laundry active material below 2% by weight of the tablet.
It is preferred that gelling binders, such as nonionic surfactants are avoided in their liquid or molten form. Nonionic surfactants and other gelling binders are not excluded from the compositions, but it is preferred that they be processed into the detergent tablets as components of particulate materials, and not as liquids.

Builders

Detergent builders can optionally be included in the compositions herein to assist in controlling mineral hardness. Inorganic as well as organic builders can be used. Builders are typically used in fabric laundering compositions to assist in the removal of particulate soils.
The level of builder can vary widely depending upon the end use of the composition.
Inorganic or P-containing detergent builders include, but are not limited to, the alkali metal, ammonium and alkanolammonium salts of polyphosphates (exemplified by the tripolyphosphates, pyrophosphates, and glassy polymeric metaphosphates), phosphonates, phytic acid, silicates, carbonates (including bicarbonates and sesquicarbonates), sulphates, and aluminosilicates. However, non-phosphate builders are required in some locales. Importantly, the compositions herein function surprisingly well even in the presence of the so-called "weak" builders (as compared with phosphates) such as citrate, or in the so-called "underbuilt" situation that may occur with zeolite or layered silicate builders.
Examples of silicate builders are the alkali metal silicates, particularly those having a $SiO_2:Na_2O$ ratio in the range 1.6:1 to 3.2:1 and layered silicates, such as the layered sodium silicates described in U.S. Patent 4,664,839, issued May 12, 1987 to H. P. Rieck. NaSKS-6 is the trademark for a crystalline layered silicate marketed by Hoechst (commonly abbreviated herein as "SKS-6"). Unlike zeolite builders, the Na SKS-6 silicate builder does not contain aluminum. NaSKS-6 has the delta-$Na_2SiO_5$ morphology form of layered silicate. It can be prepared by methods such as those described in German DE-A-3,417,649 and DE-A-3,742,043. SKS-6 is a highly preferred layered silicate for use herein, but other such layered silicates, such as those having the general formula $NaMSi_xO_{2x+1} \cdot yH_2O$ wherein M is sodium or hydrogen, x is a number from 1.9 to 4, preferably 2, and y is a number from 0 to 20, preferably 0 can be used herein. Various other layered silicates from Hoechst include NaSKS-5, NaSKS-7 and NaSKS-11, as the alpha, beta and gamma forms. As noted above, the delta-$Na_2SiO_5$ (NaSKS-6 form) is most preferred for use herein. Other silicates may also be useful such as for example magnesium silicate, which can serve as a crispening agent in granular formulations, as a stabilizing agent for oxygen bleaches, and as a component of suds control systems.
Examples of carbonate builders are the alkaline earth and alkali metal carbonates as disclosed in German Patent Application No. 2,321,001 published on November 15, 1973.
Aluminosilicate builders are useful in the present invention. Aluminosilicate builders are of great importance in most currently marketed heavy duty granular detergent compositions, and can also be a significant builder ingredient in liquid detergent formulations. Aluminosilicate builders include those having the empirical formula:

$$M_z(zAlO_2)_y] \cdot xH_2O$$

wherein z and y are integers of at least 6, the molar ratio of z to y is in the range from 1.0 to about 0.5, and x is an integer from about 15 to about 264.
Useful aluminosilicate ion exchange materials are commercially available. These aluminosilicates can be crystalline or amorphous in structure and can be naturally-occurring aluminosilicates or synthetically derived. A method for producing aluminosilicate ion exchange materials is disclosed in U.S. Patent 3,985,669, Krummel, et al, issued October 12, 1976. Preferred synthetic crystalline aluminosilicate ion exchange materials useful herein are available under the designations Zeolite A, Zeolite P (B), Zeolite MAP and Zeolite X. In an especially preferred embodiment, the crystalline aluminosilicate ion exchange material has the formula:

$$Na_{12}[(AlO_2)_{12}(SiO_2)_{12}] \cdot xH_2O$$

wherein x is from about 20 to about 30, especially about 27. This material is known as Zeolite A. Dehydrated zeolites (x = 0 - 10) may also be used herein. Preferably, the aluminosilicate has a particle size of about 0.1-10 microns in diameter.
Organic detergent builders suitable for the purposes of the present invention include, but are not restricted to, a wide variety of polycarboxylate compounds. As used herein, "polycarboxylate" refers to compounds having a plurality of carboxylate groups, preferably at least 3 carboxylates. Polycarboxylate builder can generally be added to the composition in acid form, but can also be added in the form of a neutralized salt. When utilized in salt form, alkali metals, such as sodium, potassium, and lithium, or alkanolammonium salts are preferred. Included among the polycarboxylate builders are a variety of categories of useful materials. One important category of polycarboxylate builders encompasses the ether polycarboxylates, including oxydisuccinate, as disclosed in Berg, U.S. Patent 3,128,287, issued April 7, 1964, and Lamberti et al, U.S. Patent 3,635,830, issued January 18, 1972. See also "TMS/TDS" builders of U.S. Patent 4,663,071, issued to Bush et al, on May 5, 1987. Suitable ether polycarboxylates also include cyclic compounds, particularly alicyclic compounds, such as those described in U.S. Patents 3,923,679; 3,835,163; 4,158,635; 4,120,874 and 4,102,903.

Other useful detergency builders include the ether hydroxypolycarboxylates, copolymers of maleic anhydride with ethylene or vinyl methyl ether, 1, 3, 5-trihydroxy benzene-2, 4, 6-trisulphonic acid, and carboxymethyloxysuccinic acid, the various alkali metal, ammonium and substituted ammonium salts of polyacetic acids such as ethylenediamine tetraacetic acid and nitrilotriacetic acid, as well as polycarboxylates such as mellitic acid, succinic acid, oxydisuccinic acid, polymaleic acid, benzene 1,3,5-tricarboxylic acid, carboxymethyloxysuccinic acid, and soluble salts thereof.

Citrate builders, e.g., citric acid and soluble salts thereof (particularly sodium salt), are polycarboxylate builders of particular importance for heavy duty liquid detergent formulations due to their availability from renewable resources and their biodegradability. Citrates can also be used in granular compositions, especially in combination with zeolite and/or layered silicate builders. Oxydisuccinates are also especially useful in such compositions and combinations.

Also suitable in the detergent compositions of the present invention are the 3,3-dicarboxy-4-oxa-1,6-hexanedioates and the related compounds disclosed in U.S. Patent 4,566,984, Bush, issued January 28, 1986. Useful succinic acid builders include the $C_5$-$C_{20}$ alkyl and alkenyl succinic acids and salts thereof. A particularly preferred compound of this type is dodecenylsuccinic acid. Specific examples of succinate builders include: laurylsuccinate, myristylsuccinate, palmitylsuccinate, 2-dodecenylsuccinate (preferred), 2-pentadecenylsuccinate, and the like. Laurylsuccinates are the preferred builders of this group, and are described in European Patent Application 86200690.5/0,200,263, published November 5, 1986.

Other suitable polycarboxylates are disclosed in U.S. Patent 4,144,226, Crutchfield et al, issued March 13, 1979 and in U.S. Patent 3,308,067, Diehl, issued March 7, 1967. See also Diehl U.S. Patent 3,723,322.

Fatty acids, e.g., $C_{12}$-$C_{18}$ monocarboxylic acids, can also be incorporated into the compositions alone, or in combination with the aforesaid builders, especially citrate and/or the succinate builders, to provide additional builder activity. Such use of fatty acids will generally result in a diminution of sudsing, which should be taken into account by the formulator.

In situations where phosphorus-based builders can be used, and especially in the formulation of bars used for hand-laundering operations, the various alkali metal phosphates such as the well-known sodium tripolyphosphates, sodium pyrophosphate and sodium orthophosphate can be used. Phosphonate builders such as ethane-1-hydroxy-1,1-diphosphonate and other known phosphonates (see, for example, U.S. Patents 3,159,581; 3,213,030; 3,422,021; 3,400,148 and 3,422,137) can also be used.

Bleach

The detergent compositions herein may optionally contain bleaching agents or bleaching compositions containing a bleaching agent and one or more bleach activators. When present, bleaching agents will typically be at levels of from about 1 % to about 30%, more typically from about 5% to about 20%, of the detergent composition, especially for fabric laundering. If present, the amount of bleach activators will typically be from about 0.1 % to about 60%, more typically from about 0.5% to about 40% of the bleaching composition comprising the bleaching agent-plus-bleach activator.

The bleaching agents used herein can be any of the bleaching agents useful for detergent compositions in textile cleaning, hard surface cleaning, or other cleaning purposes that are now known or become known. These include oxygen bleaches as well as other bleaching agents. Perborate bleaches, e.g., sodium perborate (e.g., mono- or tetra-hydrate) can be used herein.

Another category of bleaching agent that can be used without restriction encompasses percarboxylic acid bleaching agents and salts thereof. Suitable examples of this class of agents include magnesium monoperoxyphthalate hexahydrate, the magnesium salt of metachloro perbenzoic acid, 4-nonylamino-4-oxoperoxybutyric acid and diperoxydodecanedioic acid. Such bleaching agents are disclosed in U.S. Patent 4,483,781, Hartman, issued November 20, 1984, U.S. Patent Application 740,446, Burns et al, filed June 3, 1985, European Patent Application 0,133,354, Banks et al, published February 20, 1985, and U.S. Patent 4,412,934, Chung et al, issued November 1, 1983. Highly preferred bleaching agents also include 6-nonylamino-6-oxoperoxycaproic acid as described in U.S. Patent 4,634,551, issued January 6, 1987 to Burns et al.

Peroxygen bleaching agents can also be used. Suitable peroxygen bleaching compounds include sodium carbonate

peroxyhydrate and equivalent "percarbonate" bleaches, sodium pyrophosphate peroxyhydrate, urea peroxyhydrate, and sodium peroxide. Persulfate bleach (e.g., OXONE, manufactured commercially by DuPont) can also be used.
A preferred percarbonate bleach comprises dry particles having an average particle size in the range from about 500 micrometers to about 1,000 micrometers, not more than about 10% by weight of said particles being smaller than about 200 micrometers and not more than about 10% by weight of said particles being larger than about 1,250 micrometers. Optionally, the percarbonate can be coated with silicate, borate or water-soluble surfactants. Percarbonate is available from various commercial sources such as FMC, Solvay and Tokai Denka.
Mixtures of bleaching agents can also be used.
Peroxygen bleaching agents, the perborates, the percarbonates, etc., are preferably combined with bleach activators, which lead to the *in situ* production in aqueous solution (i.e., during the washing process) of the peroxy acid corresponding to the bleach activator. Various nonlimiting examples of activators are disclosed in U.S. Patent 4,915,854, issued April 10, 1990 to Mao et al, and U.S. Patent 4,412,934. The nonanoyloxybenzene sulfonate (NOBS) and tetraacetyl ethylene diamine (TAED) activators are typical, and mixtures thereof can also be used. See also U.S. 4,634,551 for other typical bleaches and activators useful herein.
Highly preferred amido-derived bleach activators are those of the formulae:

$$R^1N(R^5)C(O)R^2C(O)L \text{ or } R^1C(O)N(R^5)R^2C(O)L$$

wherein $R^1$ is an alkyl group containing from about 6 to about 12 carbon atoms, $R^2$ is an alkylene containing from 1 to about 6 carbon atoms, $R^5$ is H or alkyl, aryl, or alkaryl containing from about 1 to about 10 carbon atoms, and L is any suitable leaving group. A leaving group is any group that is displaced from the bleach activator as a consequence of the nucleophilic attack on the bleach activator by the perhydrolysis anion. A preferred leaving group is phenyl sulfonate.
Preferred examples of bleach activators of the above formulae include (6-octanamido-caproyl)oxybenzenesulfonate, (6-nonanamidocaproyl)oxybenzene-sulfonate, (6-decanamido-caproyl)oxybenzenesulfonate, and mixtures thereof as described in U.S. Patent 4,634,551, incorporated herein by reference.
Another class of bleach activators comprises the benzoxazin-type activators disclosed by Hodge et al in U.S. Patent 4,966,723, issued October 30, 1990, incorporated herein by reference. A highly preferred activator of the benzoxazin-type is:

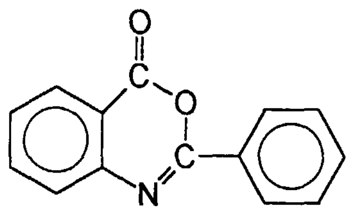

Still another class of preferred bleach activators includes the acyl lactam activators, especially acyl caprolactams and acyl valerolactams of the formulae:

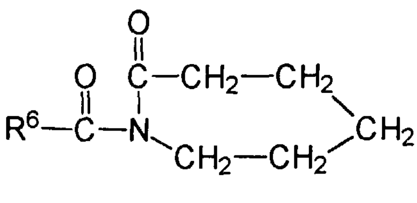
,
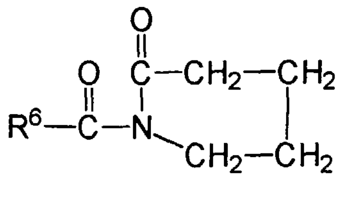

wherein $R^6$ is H or an alkyl, aryl, alkoxyaryl, or alkaryl group containing from 1 to about 12 carbon atoms. Highly preferred lactam activators include benzoyl caprolactam, octanoyl caprolactam, 3,5,5-trimethylhexanoyl caprolactam, nonanoyl caprolactam, decanoyl caprolactam, undecenoyl caprolactam, benzoyl valerolactam, octanoyl valerolactam, decanoyl valerolactam, undecenoyl valerolactam, nonanoyl valerolactam, 3,5,5-trimethylhexanoyl valerolactam and mixtures thereof. See also U.S. Patent 4,545,784, issued to Sanderson, October 8, 1985, incorporated herein by reference, which discloses acyl caprolactams, including benzoyl caprolactam, adsorbed into sodium perborate.
Bleaching agents other than oxygen bleaching agents are also known in the art and can be utilized herein. One type of

non-oxygen bleaching agent of particular interest includes photoactivated bleaching agents such as the sulfonated zinc and/or aluminum phthalocyanines. See U.S. Patent 4,033,718, issued July 5, 1977 to Holcombe et al. If used, detergent compositions will typically contain from about 0.025% to about 1.25%, by weight, of such bleaches, especially sulfonate zinc phthalocyanine.

If desired, the bleaching compounds can be catalyzed by means of a manganese compound. Such compounds are well known in the art and include, for example, the manganese-based catalysts disclosed in U.S. Pat. 5,246,621, U.S. Pat. 5,244,594; U.S. Pat. 5,194,416; U.S. Pat. 5,114,606; and European Pat. App. Pub. Nos. 549,271A1, 549,272A1, 544,440A2, and 544,490A1; Preferred examples of these catalysts include $Mn^{IV}_2(u\text{-}O)_3(1,4,7\text{-trimethyl-}1,4,7\text{-triazacyclononane})_2(PF_6)_2$, $Mn^{III}_2(u\text{-}O)_1(u\text{-}OAc)_2(1,4,7\text{-trimethyl-}1,4,7\text{-triazacyclononane})_2\text{-}(ClO_4)_2$, $Mn^{IV}_4(u\text{-}O)_6(1,4,7\text{-triazacyclononane})_4(ClO_4)_4$, $Mn^{III}Mn^{IV}_4(u\text{-}O)_1(u\text{-}OAc)_2\text{-}(1,4,7\text{-trimethyl-}1,4,7\text{-triazacyclononane})_2(ClO_4)_3$, $Mn^{IV}(1,4,7\text{-trimethyl-}1,4,7\text{-triazacyclononane})\text{-}(OCH_3)_3(PF_6)$, and mixtures thereof. Other metal-based bleach catalysts include those disclosed in U.S. Pat. 4,430,243 and U.S. Pat. 5,114,611. The use of manganese with various complex ligands to enhance bleaching is also reported in the following United States Patents: 4,728,455; 5,284,944; 5,246,612; 5,256,779; 5,280,117; 5,274,147; 5,153,161; and 5,227,084.

As a practical matter, and not by way of limitation, the compositions and processes herein can be adjusted to provide on the order of at least one part per ten million of the active bleach catalyst species in the aqueous washing liquor, and will preferably provide from about 0.1 ppm to about 700 ppm, more preferably from about 1 ppm to about 500 ppm, of the catalyst species in the laundry liquor.

Enzymes

Enzymes can be included in the formulations herein for a wide variety of fabric laundering purposes, including removal of protein-based, carbohydrate-based, or triglyceride-based stains, for example, and for the prevention of refugee dye transfer, and for fabric restoration. The enzymes to be incorporated include proteases, amylases, lipases, cellulases, and peroxidases, as well as mixtures thereof. Other types of enzymes may also be included. They may be of any suitable origin, such as vegetable, animal, bacterial, fungal and yeast origin. However, their choice is governed by several factors such as pH-activity and/or stability optima, thermostability, stability versus active detergents, builders and so on. In this respect bacterial or fungal enzymes are preferred, such as bacterial amylases and proteases, and fungal cellulases.

Enzymes are normally incorporated at levels sufficient to provide up to about 5 mg by weight, more typically about 0.01 mg to about 3 mg, of active enzyme per gram of the composition. Stated otherwise, the compositions herein will typically comprise from about 0.001% to about 5%, preferably 0.01%-1 % by weight of a commercial enzyme preparation. Protease enzymes are usually present in such commercial preparations at levels sufficient to provide from 0.005 to 0.1 Anson units (AU) of activity per gram of composition.

Suitable examples of proteases are the subtilisins which are obtained from particular strains of B. subtilis and B. licheniforms. Another suitable protease is obtained from a strain of Bacillus, having maximum activity throughout the pH range of 8-12, developed and sold by Novo Industries A/S under the registered trade name ESPERASE. The preparation of this enzyme and analogous enzymes is described in British Patent Specification No. 1,243,784 of Novo. Proteolytic enzymes suitable for removing protein-based stains that are commercially available include those sold under the tradenames ALCALASE and SAVINASE by Novo Industries A/S (Denmark) and MAXATASE by International Bio-Synthetics, Inc. (The Netherlands). Other proteases include Protease A (see European Patent Application 130,756, published January 9, 1985) and Protease B (see European Patent Application Serial No. 87303761.8, filed April 28, 1987, and European Patent Application 130,756, Bott et al, published January 9, 1985).

Amylases include, for example, $\alpha$-amylases described in British Patent Specification No. 1,296,839 (Novo), RAPIDASE, International Bio-Synthetics, Inc. and TERMAMYL, Novo Industries.

The cellulase usable in the present invention include both bacterial or fungal cellulase. Preferably, they will have a pH optimum of between 5 and 9.5. Suitable cellulases are disclosed in U.S. Patent 4,435,307, Barbesgoard et al, issued March 6, 1984, which discloses fungal cellulase produced from Humicola insolens and Humicola strain DSM1800 or a cellulase 212-producing fungus belonging to the genus Aeromonas, and cellulase extracted from the hepatopancreas of a marine mollusk (Dolabella Auricula Solander). suitable cellulases are also disclosed in GB-A-2.075.028; GB-A-2.095.275 and DE-OS-2.247.832. CAREZYME (Novo) is especially useful.

Suitable lipase enzymes for detergent usage include those produced by microorganisms of the Pseudomonas group, such as Pseudomonas stutzeri ATCC 19.154, as disclosed in British Patent 1,372,034. See also lipases in Japanese Patent Application 53,20487, laid open to public inspection on February 24, 1978. This lipase is available from Amano Pharmaceutical Co. Ltd., Nagoya, Japan, under the trade name Lipase P "Amano," hereinafter referred to as "Amano-P." Other commercial lipases include Amano-CES, lipases ex Chromobacter viscosum, e.g. Chromobacter viscosum var. lipolyticum NRRLB 3673, commercially available from Toyo Jozo Co., Tagata, Japan; and further Chromobacter viscosum lipases from U.S. Biochemical Corp., U.S.A. and Disoynth Co., The Netherlands, and lipases ex Pseudomonas

gladioli. The LIPOLASE enzyme derived from Humicola lanuginosa and commercially available from Novo (see also EPO 341,947) is a preferred lipase for use herein.
Peroxidase enzymes are used in combination with oxygen sources, e.g., percarbonate, perborate, persulfate, hydrogen peroxide, etc. They are used for "solution bleaching," i.e. to prevent transfer of dyes or pigments removed from substrates during wash operations to other substrates in the wash solution. Peroxidase enzymes are known in the art, and include, for example, horseradish peroxidase, ligninase, and haloperoxidase such as chloro- and bromo-peroxidase. Peroxidase-containing detergent compositions are disclosed, for example, in PCT International Application WO 89/099813, published October 19, 1989, by O. Kirk, assigned to Novo Industries A/S.
A wide range of enzyme materials and means for their incorporation into synthetic detergent compositions are also disclosed in U.S. Patent 3,553,139, issued January 5, 1971 to McCarty et al. Enzymes are further disclosed in U.S. Patent 4,101,457, Place et al, issued July 18, 1978, and in U.S. Patent 4,507,219, Hughes, issued March 26, 1985, both. Enzyme materials useful for liquid detergent formulations, and their incorporation into such formulations, are disclosed in U.S. Patent 4,261,868, Hora et al, issued April 14, 1981. Enzymes for use in detergents can be stabilized by various techniques. Enzyme stabilization techniques are disclosed and exemplified in U.S. Patent 3,600,319, issued August 17, 1971 to Gedge, et al, and European Patent Application Publication No. 0 199 405, Application No. 86200586.5, published October 29, 1986, Venegas. Enzyme stabilization systems are also described, for example, in U.S. Patent 3,519,570.

Other components which are commonly used in detergent compositions and which may be incorporated into detergent tablets of the preferred embodiment of the present invention include chelating agents, soil release agents, soil antiredeposition agents, dispersing agents, brighteners, suds suppressors, fabric softeners, dye transfer inhibition agents and perfumes.

The compounds disclosed above for a product are advantageously packed in a packaging system according to the packaged product of the invention.

In a preferred embodiment, the packaging system of the packaged product of the invention is formed from a sheet of flexible material. Materials suitable for use as a flexible sheet include mono-layer, co-extruded or laminated films. Such films may comprise various components, such as poly-ethylene, poly-propylene, poly-styrene, poly-ethylene-terephtalate. In a most preferred embodiment of the invention, the packaging system is composed of a poly-ethylene and bi-oriented-poly-propylene co-extruded film with an MVTR of less than 1 g/day/$m^2$. The MVTR of the packaging system is preferably of less than 10 g/day/$m^2$, more preferably of less than 5 g/day/$m^2$, even more preferably of less than 1 g/day/$m^2$ and most preferably of less than 0.5 g/day/$m^2$. The film (2) may have various thicknesses. The thickness should typically be between 10 and 150 μm, preferably between 15 and 120 μm, more preferably between 20 and 100 μm, even more preferably between 25 and 80 μm and most preferably between 30 and 40 μm.

In a most preferred embodiment of the invention, the packaging material comprises several layers, the perfume being located in the layer closest to the product when the product is packaged. As an alternative, the perfume could be located in a layer closer to the product, whereby there is an extra layer placed between the perfume containing layer and the product, and whereby the extra layer is allowing diffusion of the perfume. Indeed, it is preferred that the perfume diffuses inside of the package during storage rather than outside of the package. This is favoured in a more preferred embodiment whereby the packaged product is formed from a flexible sheet of material, and whereby the film has an other layer located further from the product than the layer in which the perfume is located when the product is packaged whereby the other layer is a perfume barrier layer. Indeed, in such an embodiment, the perfume is prevented from migrating through the package towards the outside of the packaging system. Such barrier layers are typically found with packaging materials having a low oxygen transmission rate, typically of less than 300 $cm^3/m^2$/day, preferably of less than 150 $cm^3/m^2$/day, more preferably of less than 100 $cm^3/m^2$/day, even more preferably of less than 50 $cm^3/m^2$/day and most preferably of less than 10 $cm^3/m^2$/day. Typical materials having such barrier properties include bi oriented polypropylene, poly ethylene terephthalate, Nylon, poly(ethylene vinyl alcohol) , or laminated materials comprising one of these, as well as SiOx (Silicium oxydes), or metallic foils such as aluminium foils for example. Further, such packaging material may have a beneficial influence on the stability of the product during storage for example.

The packing method used are typically the wrapping methods disclosed in WO92/20593, including flow wrapping or over wrapping. This document is included as a reference for the present invention. When using such processes, a longitudinal seal is provided, which may be a fin seal or an overlapping seal, after which a first end of the packaging system is closed with a first end seal, followed by closure of the second end with a second end seal. The packaging system may comprise re-closing means as described in WO92/20593. In particular, using a twist, a cold seal or an adhesive is particularly suited to the packaging system of the present invention. Indeed, a band of cold seal or a band of adhesive may be applied to the surface of the packaging system at a position adjacent to the second end of the packaging system, so that this band may provide both the initial seal and re-closure of the packaging system. In such a case the adhesive or cold seal band may correspond to a region having a cohesive surface, i.e. a surface which will adhere only to another cohesive surface. Such re-closing means may also comprise spacers which will prevent unwanted adhesion. Such spacers are described in WO 95/13225, published on the 18th of May 1995. There may also

be a plurality of spacers and a plurality of strips of adhesive material. The main requirement is that the communication between the exterior and the interior of the package should be minimal, even after first opening of the packaging system. In a preferred embodiment of the present invention, a cold seal is used, and in particular a grid of cold seal, whereby the cold seal is adapted so as to facilitate opening of the packaging system.

**Claims**

**1.** A packaged product comprising a packaging system and a product, characterised in that the packaging system is formed from a packaging material, the packaging material having a packaging composition comprising a perfume.

**2.** The packaged product according to claim 1, whereby the packaging system comprises means for facilitating opening of the packaging system.

**3.** The packaged product according to claim 2, whereby the perfume is comprised in the means for facilitating opening.

**4.** A packaged product according to claim 1, whereby the packaging system is formed from a sheet of flexible material.

**5.** A packaged product according to claim 1, whereby the packaging material comprises several layers, the perfume being located in the layer closest to the product when the product is packaged.

**6.** A packaged product according to both claims 4 and 5, whereby the film has an other layer located further from the product than the layer in which the perfume is located when the product is packaged, whereby the other layer is a perfume barrier layer.

**7.** A packaged product according to claim 1, whereby the product is formed from a product material, the product material having a product composition comprising the perfume.

**8.** The packaged product according to claim 1, whereby the product is obtained by compression of a flowing material.

**9.** The packaged product according to claim 1, whereby the packaging material has an oxygen transmission rate of less than 300 $cm^3/m^2$/day.

**10.** The packaged product according to claim 1, whereby the product has a tensile strength of at least 5 kPa

European Patent Office

# EUROPEAN SEARCH REPORT

Application Number
EP 98 87 0225

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X<br><br>Y | US 4 990 381 A (HOLZNER GUENTER)<br>5 February 1991<br>* column 1, line 9 - line 39 *<br>* column 1, line 60 - column 2, line 14 *<br>* column 3, line 15 - line 31 *<br>* column 4, line 62 - column 5, line 26 *<br>* column 6, line 3 - line 10 *<br>* figures 1-5 *<br>--- | 1,4-8<br><br>9,10 | B65D65/38 |
| Y | EP 0 363 102 A (POLYPLASTICS CO)<br>11 April 1990<br>* page 2, line 27 - line 37 *<br>* page 5 *<br>--- | 9,10 | |
| X | GB 2 198 062 A (ACRATHANE PROD LTD)<br>8 June 1988<br>* page 1, line 19 - page 2, line 19 *<br>* page 2, line 24 - page 3, line 13 *<br>* page 6, line 13 - line 24 *<br>--- | 1-4 | |
| X | EP 0 004 463 A (UNILEVER PLC ;UNILEVER NV (NL)) 3 October 1979<br>* page 1, line 3 - line 14 *<br>* page 2, line 6 - line 24 *<br>--- | 1,7,8 | TECHNICAL FIELDS SEARCHED (Int.Cl.6)<br>B65D |
| X | FR 2 738 227 A (MAUDUIT DANIEL)<br>7 March 1997<br>* page 2, line 5 - line 37 *<br>----- | 1,4 | |

The present search report has been drawn up for all claims

| Place of search | Date of completion of the search | Examiner |
|---|---|---|
| THE HAGUE | 17 March 1999 | Papatheofrastou, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 98 87 0225

This annex lists the patent family members relating to the patent documents cited in the above-mentioned European search report.
The members are as contained in the European Patent Office EDP file on
The European Patent Office is in no way liable for these particulars which are merely given for the purpose of information.

17-03-1999

| Patent document cited in search report | Publication date | Patent family member(s) | Publication date |
|---|---|---|---|
| US 4990381 A | 05-02-1991 | AU 608340 B | 28-03-1991 |
| | | AU 1926888 A | 27-01-1989 |
| | | CA 1306175 A | 11-08-1992 |
| | | EP 0300286 A | 25-01-1989 |
| | | JP 1049628 A | 27-02-1989 |
| EP 0363102 A | 11-04-1990 | AT 106057 T | 15-06-1994 |
| | | CN 1041572 A,B | 25-04-1990 |
| | | DE 68915505 D | 30-06-1994 |
| | | JP 2242744 A | 27-09-1990 |
| | | JP 2507073 B | 12-06-1996 |
| GB 2198062 A | 08-06-1988 | NONE | |
| EP 0004463 A | 03-10-1979 | AU 529475 B | 09-06-1983 |
| | | AU 4538679 A | 27-09-1979 |
| | | BR 7901751 A | 20-11-1979 |
| FR 2738227 A | 07-03-1997 | NONE | |

EPO FORM P0459

For more details about this annex : see Official Journal of the European Patent Office, No. 12/82